(19) Europäisches Patentamt
European Patent Office
Office européen des brevets

(11) **EP 2 677 681 A1**

(12) **EUROPÄISCHE PATENTANMELDUNG**

(43) Veröffentlichungstag:
**25.12.2013 Patentblatt 2013/52**

(51) Int Cl.:
***H04L 9/08*** *(2006.01)*

(21) Anmeldenummer: **12172581.6**

(22) Anmeldetag: **19.06.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Bundesrepublik Deutschland, vertreten durch das Bundesministerium des Innern, vertreten durch das Bundesamt für Sicherheit 53175 Bonn (DE)**

(72) Erfinder: **Dr Bender, Jens 53175 Bonn (DE)**

(74) Vertreter: **von Kreisler Selting Werner Deichmannhaus am Dom Bahnhofsvorplatz 1 50667 Köln (DE)**

(54) **Verfahren zur zumindest einseitig authentisierten, sicheren Kommunikation zwischen zwei Kommunikationspartnern**

(57) Bei dem Verfahren zur zumindest einseitig und insbesondere zweiseitig authentisierten, sicheren Kommunikation zwischen einem ersten Kommunikationspartner und einem zweiten Kommunikationspartner mittels kryptographischer Operationen in einer kryptographisch sicheren Gruppe mit einem kryptographischen Generator und mittels einer Hash-Funktion, wobei der erste Kommunikationspartner über ein statisches Schlüsselpaar aus einem privaten statischen Schlüssel und einem öffentlichen statischen Schlüssel verfügt, der sich anhand einer Funktion des kryptographischen Generators mit dem privaten statischen Schlüssel als Argument ergibt und der durch eine Zertifizierungsstelle mittels eines Zertifikats bescheinigt wird, erfolgt die Authentisierung auf Basis von kryptographischen Signaturen, wobei die für die Signaturen durchgeführten kryptographischen Berechnungen für die Absicherung des Kommunikationskanals weiterverwendet werden, was insbesondere vorteilhaft ist für Kommunikationspartner mit beschränkten Ressourcen, wie z.B. Chipkarten, da bei der Berechnung ein Exponentiation-Berechnungsschritt entfällt.

EP 2 677 681 A1

**Beschreibung**

Die Erfindung betrifft ein Verfahren zur zumindest einseitig und insbesondere zweiseitig authentisierten, sicheren Kommunikation zwischen zwei Kommunikationspartnern, und zwar mittels kryptographischer Operationen in einer kryptographischen Gruppe G mit einem kryptographischen Generator g und mittels einer Hash-Funktion H, wobei der erste Kommunikationspartner A über ein statisches Schlüsselpaar aus einem privaten statischen Schlüssel $x_A$ und einem öffentlichen statischen Schlüssel $X_A$ verfügt, der sich anhand einer Funktion des kryptographischen Generators g mit dem privaten statischen Schlüssel $x_A$ als Argument ergibt und der durch eine Zertifizierungsstelle C mittels eines Zertifikats Cert ($X_A$) bescheinigt ist.

Aus TR-03110 (Advanced Security Mechanism for Machine Readable Travel Documents) sind folgende Verfahren zur Authentisierung bekannt:

- eine "Terminalauthentisierung", die die einseitige Authentisierung einer Partei einschließlich zusätzlicher authentisierter Daten M erlaubt, und
- eine "Chipauthentisierung", die die einseitige Authentisierung einer Partei und Berechnung eines gemeinsamen Geheimnisses zur Sicherung eines Kommunikationskanals erlaubt.

Aus RFC 5246 (Transport Layer Security (TLS) Version 1.2) ist ein Verfahren zum Aufbau einer ein- oder zweiseitig authentisierten Verbindung bekannt.

Bekannt aus "The PACE|AA Protocol for Machine Readable Travel Documents, and its Security", Financial Cryptography 2012, ist ein Verfahren zum Aufbau einer einseitig zertifikatsbasiert authentisierten Kommunikationsverbindung.

Ferner ist aus DE-B-10 2011 013 562 ein Verfahren zur Authentisierung zwecks vertrauenswürdiger Kommunikation zwischen zwei Kommunikationspartnern bekannt, bei dem die Authentisierung in zwei Schritten erfolgt, wobei zunächst eine passwordbasierte Authentisierung und alsdann eine zertifikatsbasierte Authentisierung erfolgt.

Die bekannten Verfahren zur authentisierten, sicheren Kommunikation zwischen zwei Kommunikationspartnern sind zumeist rechenintensiv, was insbesondere dann von Nachteil ist, wenn diese Verfahren im Zusammenhang mit einer Kommunikation zwischen zwei Chipkarten eingesetzt werden sollen. Ein derartiger Fall kann beispielsweise bei der zukünftigen Generation von Krankenversicherungskarten auftreten. Aber auch bei anderen Anwendungsfällen, bei denen den Kommunikationspartnern lediglich beschränkte Ressourcen für die Authentisierung zur Verfügung stehen, sind die bekannten Authentisierungsverfahren wenig geeignet.

Aufgabe der Erfindung ist es, ein Verfahren zur zumindest einseitig und insbesondere zur zweiseitig authentisierten, sicheren Kommunikation zwischen zwei Kommunikationspartnern anzugeben, das weniger rechenintensiv ist als die bekannten Verfahren.

Zur Lösung dieser Aufgabe wird mit der Erfindung ein Verfahren zur zumindest einseitig authentisierten, sicheren Kommunikation zwischen einem ersten Kommunikationspartner A und einem zweiten Kommunikationspartner B vorgeschlagen, und zwar mittels kryptographischer Operationen in einer kryptographischen Gruppe G mit einem kryptographischen Generator g und mittels einer Hash-Funktion H, wobei der erste Kommunikationspartner A über ein statisches Schlüsselpaar aus einem privaten statischen Schlüssel $x_A$ und einem öffentlichen statischen Schlüssel $X_A$ verfügt, der sich anhand einer Funktion des kryptographischen Generators g mit dem privaten statischen Schlüssel $x_A$ als Argument ergibt und der durch eine Zertifizierungsstelle C mittels eines Zertifikats Cert ($X_A$) bescheinigt ist. Das erfindungsgemäße Verfahren umfasst die folgenden Schritte:

- Bereitstellen eines ephemeralen Schlüsselpaares für den ersten Kommunikationspartner A umfassend einen privaten ephemeralen Schlüssel $y_A$ und einen öffentlichen ephemeralen Schlüssel $Y_A$, der sich anhand einer Funktion des kryptographischen Generators g mit dem privaten ephemeralen Schlüssel $y_A$ als Argument ergibt,
- Bereitstellen einer elektronischen Signatur $s_A$ für den ersten Kommunikationspartner A,
- Bereitstellen eines ephemeralen Schlüsselpaares für den zweiten Kommunikationspartner B umfassend einen privaten ephemeralen Schlüssel $y_B$ und einem öffentlichen ephemeralen Schlüssel $Y_B$, der sich anhand einer Funktion des kryptographischen Generators g mit dem privaten ephemeralen Schlüssel $y_B$ als Argument ergibt,
- Zurverfügungstellung der öffentlichen statischen und ephemeralen Schlüssel $X_A$, $Y_A$ des ersten Kommunikationspartners A sowie dessen elektronischer Signatur $s_A$ für den zweiten Kommunikationspartner B,
- zur Verfügungsstellen des öffentlichen ephemeralen Schlüssels $Y_B$ des zweiten Kommunikationspartners B für den ersten Kommunikationspartner A,
- auf Seiten des zweiten Kommunikationspartners B erfolgendes Verifizieren der elektronischen Signatur $s_A$ des ersten Kommunikationspartners A durch Berechnung eines ersten Schlüssels anhand einer Funktion aus dem kryptographischen Generator g, der elektronischen Signatur $s_A$ sowie dem öffentlichen statischen Schlüssel $X_A$ des ersten Kommunikationspartners A und der Hash-Funktion H sowie des öffentlichen ephemeralen Schlüssels $Y_A$ des ersten Kommunikationspartners A und Vergleichen des berechneten ersten Schlüssels mit dem öffentlichen ephemeralen Schlüssel $Y_A$ des ersten Kommunikationspartners,
- auf Seiten des zweiten Kommunikationspartners B erfolgendes Überprüfen der Authentizität des öffentlichen statischen Schlüssels $X_A$ des ersten Kommunikationspartners A mit Hilfe des Zertifikats Cert ($X_A$) und,

- durch beide Kommunikationspartner A,B erfolgendes Berechnen eines gemeinsamen Diffie-Hellman-Geheimnisses K aus den privaten ephemeralen Schlüsseln $y_A, y_B$ und den öffentlichen ephemeralen Schlüsseln $Y_A, Y_B$ beider Kommunikationspartner A, B und Ableiten eines Sitzungsschlüssels aus diesem Geheimnis K zur Absicherung der nachfolgenden Kommunikation,

- wobei die Kommunikation authentisiert ist, wenn sowohl der berechnete erste Schlüssel mit dem öffentlichen ephemeralen Schlüssel $Y_A$ des ersten Kommunikationspartners A übereinstimmt, als auch die Authentizität des öf-fentfichen statischen Schlüssels $X_A$ des ersten Kommunikationspartners A gegeben ist.

Bei dem erfindungsgemäßen Verfahren wird für beide Kommunikationspartner jeweils ein ephemerales Schlüsselpaar zur Verfügung gestellt. Jedes Schlüsselpaar kann dabei von dem betreffenden Kommunikationspartner selbst erzeugt werden. Dies ist der Normalfall. Ferner verfügen beide Kommunikationspartner über jeweils ein statisches Schlüsselpaar. Zusätzlich verfügt mindestens einer der beiden Kommunikationspartner über eine elektronische Signatur, die typischerweise von dem Kommunikationspartner selbst erzeugt wird. Beide Kommunikationspartner tauschen ihre jeweiligen öffentlichen statischen (und ephemeralen) Schlüssel aus. Derjenige Kommunikationspartner, der die sichere Kommunikation authentisiert (nachfolgend erster Kommunikationspartner genannt), erhält von dem anderen Kommunikationspartner (nachfolgend zweiter Kommunikationspartner genannt) ferner die elektronische Signatur und berechnet aus verschiedenen ihm zur Verfügung stehenden Informationen einen (ersten) Schlüssel, den er mit dem öffentlichen ephemeralen Schlüssel des zweiten Kommunikationspartners vergleicht. Ferner überprüft der erste Kommunikationspartner, der den ersten Schlüssel berechnet hat, die Authentizität des öffentlichen statischen Schlüssels des zweiten Kommunikationspartners, und zwar mit Hilfe des zugehörigen Zertifikats. Diese Zertifikate können von einer gemeinsamen Zertifizierungsstelle oder von unterschiedlichen Zertifizierungsstellen bescheinigt sein.

Erfindungsgemäß berechnen dann beide Kommunikationspartner ein gemeinsames Diffie-Hellman-Geheimnis, und zwar gemäß der Erfindung dadurch, dass sie die privaten ephemeralen Schlüssel und die öffentlichen ephemeralen Schlüssel beider Kommunikationspartner verwenden. Aus dem Geheimnis leiten beide Kommunikationspartner dann einen Sitzungsschlüssel zur Absicherung der nachfolgenden Kommunikation ab. Diese nachfolgende Kommunikation ist genau dann authentisiert, wenn sowohl der berechnete erste Schlüssel mit dem öffentlichen ephemeralen Schlüssel des ersten Kommunikationspartners übereinstimmt, als auch die zuvor überprüfte Authentizität des öffentlichen statischen Schlüssels des ersten Kommunikationspartners gegeben ist.

Bei dem erfindungsgemäßen Verfahren zur zumindest einseitig und insbesondere zweiseitig authentisierten, sicheren Kommunikation zwischen den beiden Kommunikationspartnern erfolgt also die Authentisierung auf Basis von kryptographischen Signaturen, wobei die für die Signaturen durchgeführten kryptographischen Berechnungen für die Absicherung des Kommunikationskanals weiterverwendet werden. Hierdurch ergibt sich mit Vorteil eine ein- bzw. zweiseitige Authentisierung in einem Schritt. Dies verringert den Vorabkommunikationsaufwand und auch den Rechenaufwand, was bei Kommunikationspartnern mit begrenzten Ressourcen von großem Vorteil ist. Bei Verwendung der Erfindung als Ersatz für "Terminalauthentisierungen" und "Chipauthentisierungen" gemäß TR-03110 für eine ein- bzw. zweiseitige Authentisierung muss nicht mehr, wie nach dem Stand der Technik, eine Verknüpfung der beiden Protokolle durch zusätzliche kryptographische Maßnahmen erfolgen, z.B. durch Signatur von zusätzlichen Daten in der Terminalauthentisierung. Dies ist bei dem erfindungsgemäß vorgeschlagenen Verfahren nicht mehr notwendig, wodurch der Ablauf wesentlich vereinfacht wird. Das erfindungsgemäße Verfahren hat darüber hinaus den Vorteil, dass durch die Verwendung der öffentlichen und privaten statischen Schlüssel sowohl für die Signatur als auch für die Berechnung des Diffie-Hellman-Geheimnisses auf Seiten beider Kommunikationspartner jeweils eine Exponentiation entfällt. Dies ist insbesondere für solche Kommunikationspartner vorteilhaft, die über beschränkte Ressourcen verfügen, wie es beispielsweise bei Chipkarten der Fall ist.

Bei dem erfindungsgemäßen Verfahren zur zweiseitig authentisierten, sicheren Kommunikation mittels kryptographischer Operationen in einer kryptographischen Gruppe G mit einem kryptographischen Generator g und mittels einer Hash-Funktion H, wobei beide Kommunikationspartner A,B über ein statisches Schlüsselpaar aus einem privaten statischen Schlüssel $x_A, x_B$ und einem öffentlichen statischen Schlüssel verfügen, wobei die öffentlichen statischen Schlüssel sich jeweils anhand einer Funktion des kryptographischen Generators g mit dem jeweiligen privaten öffentlichen Schlüssel des betreffenden Kommunikationspartners als Argument ergeben und durch eine gemeinsame Zertifizierungsstelle C oder unterschiedliche Zertifizierungsstellen C, C' mittels Zertifikaten Cert($X_A$), Cert($X_B$) bescheinigt sind, wird wie folgt verfahren:

- Bereitstellen eines ephemeralen Schlüsselpaares für den ersten Kommunikationspartner A umfassend einen privaten ephemeralen Schlüssel $y_A$ und einen öffentlichen ephemeralen Schlüssel $Y_A$, der sich anhand einer Funktion des kryptographischen Generators g mit dem privaten ephemeralen Schlüssel $y_A$

als Argument ergibt,

- Bereitstellen einer elektronischen Signatur $s_A$ für den ersten Kommunikationspartner A,
- Bereitstellen eines ephemeralen Schlüsselpaares für den zweiten Kommunikationspartner B umfassend einen privaten ephemeralen Schlüssel $y_B$ und einem öffentlichen ephemeralen Schlüssel $Y_B$, der sich anhand einer Funktion des kryptographischen Generators g mit dem privaten ephemeralen Schlüssel $y_B$ als Argument ergibt,
- Bereitstellen einer elektronischen Signatur $s_B$ für den zweiten Kommunikationspartner B,
- Zurverfügungstellung der öffentlichen statischen und ephemeralen Schlüssel $X_A$, $Y_A$ des ersten Kommunikationspartners A sowie dessen elektronischer Signatur $s_A$ für den zweiten Kommunikationspartner B,
- zur Verfügungsstellen der öffentlichen statischen und ephemeralen Schlüssel $X_B$, $Y_B$ des zweiten Kommunikationspartners B für den ersten Kommunikationspartner A,
- auf Seiten des zweiten Kommunikationspartners B erfolgendes Verifizieren der elektronischen Signatur $s_A$ des ersten Kommunikationspartners A durch Berechnung eines ersten Schlüssels anhand einer Funktion aus dem kryptographischen Generator g, der elektronischen Signatur $s_A$ sowie dem öffentlichen statischen Schlüssel $X_A$ des ersten Kommunikationspartners A und der Hash-Funktion H sowie des öffentlichen ephemeralen Schlüssels $Y_A$ des ersten Kommunikationspartners A und Vergleichen des berechneten ersten Schlüssels mit dem öffentlichen ephemeralen Schlüssel $Y_A$ des ersten Kommunikationspartners,
- auf Seiten des zweiten Kommunikationspartners B erfolgendes Überprüfen der Authentizität des öffentlichen statischen Schlüssels $X_A$ des ersten Kommunikationspartners A mit Hilfe des Zertifikats Cert ($X_A$),
- auf Seiten des ersten Kommunikationspartners A erfolgendes Verifizieren der elektronischen Signatur $s_B$ des zweiten Kommunikationspartners B durch Berechnung eines zweiten Schlüssels anhand einer Funktion aus dem kryptographischen Generator g, der elektronischen Signatur $s_B$ sowie dem öffentlichen statischen Schlüssel $X_B$ des zweiten Kommunikationspartners B und der Hash-Funktion H sowie des öffentlichen ephemeralen Schlüssels $Y_B$ des zweiten Kommunikationspartners B und Vergleichen des berechneten zweiten Schlüssels mit dem öffentlichen ephemeralen Schlüssel $Y_B$ des zweiten Kommunikationspartners B und
- auf Seiten des ersten Kommunikationspartners A erfolgendes Überprüfen der Authentizität des öffentlichen statischen Schlüssels $X_B$ des zweiten Kommunikationspartners B mit Hilfe des Zertifikats Cert ($X_B$),
- durch beide Kommunikationspartner A,B erfolgendes Berechnen eines gemeinsamen Diffie-Hellman-Geheimnisses K aus den privaten ephemeralen Schlüsseln $y_A$,$y_B$ und den öffentlichen ephemeralen Schlüsseln $Y_A$,$Y_B$ beider Kommunikationspartner A, B und Ableiten eines Sitzungsschlüssels aus diesem Geheimnis K zur Absicherung der nachfolgenden Kommunikation,
- wobei die Kommunikation authentisiert ist, wenn sowohl der berechnete erste Schlüssel mit dem öffentlichen ephemeralen Schlüssel $Y_A$ des ersten

Kommunikationspartners A übereinstimmt, als auch der berechnete zweite Schlüssel mit dem öffentlichen ephemeralen Schlüssel $Y_B$ des zweiten Kommunikationspartners B übereinstimmt, als auch die Authentizität der öffentlichen statischen Schlüssel $X_A$ der beiden Kommunikationspartner A,B gegeben ist.

In weiterer vorteilhafter Ausgestaltung der Erfindung ist vorgesehen, dass die kryptographische Gruppe G eine multiplikativ geschriebene kryptographische Gruppe G ist und dass der öffentliche statische Schlüssel $X_A$,$X_B$ jeweils durch Bildung der Potenz mit dem Kryptographie-Generator g als Basis und dem jeweiligen privaten statischen Schlüssel $x_A$,$x_B$ als Exponent berechnet wird.

Insbesondere kann nach dem erfindungsgemäßen Verfahren vorgesehen sein, dass der öffentliche ephemerale Schlüssel $Y_A$,$Y_B$ jeweils durch Bildung der Potenz mit dem kryptographischen Generator g als Basis und dem jeweiligen privaten ephemeralen Schlüssel $y_A$, $y_B$ als Exponent berechnet wird

In weiterer vorteilhafter Ausgestaltung der Erfindung kann es zweckmäßig sein, wenn sich der oder jeder im Zusammenhang mit der Verifizierung einer elektronischen Signatur $s_A$,$s_B$ berechnete Schlüssel als Produkt aus einem ersten Faktor und einem zweiten Faktor ergibt, wobei der erste Faktor gleich der Potenzbildung mit dem kryptographischen Generator g als Basis und der elektronischen Signatur $s_A$,$s_B$ des jeweiligen Kommunikationspartners A,B als Exponent und der zweite Faktor gleich der Potenzbildung mit dem öffentlichen statischen Schlüssel $X_A$,$X_B$ des jeweiligen Kommunikationspartners A,B als Basis und dem Wert der Hash-Funktion H für den öffentlichen ephemeralen Schlüssel $Y_A$,$Y_B$ des jeweiligen Kommunikationspartners A,B ist.

Alternativ zum zuvor beschrieben Verfahren auf Basis einer Schnorr-Signatur kann als elektronische Signatur auch eine Signatur gemäß dem ECDSA-Standard vorgesehen werden.

Ferner können bei der elektronischen Signatur für einen oder jeden der Kommunikationspartner zusätzlich zu authentisierende Daten verwendet werden, wobei die Verifikation der elektronischen Signatur unter Verwendung dieser zusätzlichen zu authentisierenden Daten erfolgt. Diese zusätzlichen zu authentisierenden Daten können für beide Kommunikationspartner gleich oder unterschiedlich sein.

Schließlich kann für die kryptographische Gruppe erfindungsgemäß auch gelten, dass die Berechnung des Logarithmus kryptographisch schwierig ist und/oder dass die Gruppe eine kryptographisch sichere Gruppe ist.

Die Erfindung wird nachfolgend anhand zweier Ausführungsbeispiele näher beschrieben. Bei diesen Ausführungsbeispielen wird davon ausgegangen, dass sämtliche kryptographischen Operationen in einer multiplikativ geschriebenen kryptographisch sicheren Gruppe G erfolgen, in der die Berechnung des diskreten Logarithmus kryptographisch schwierig ist. Ein Domainparameter der kryptographisch sicheren Gruppe G ist der Generator g. Ferner ist mit H eine Hash-Funktion bezeichnet. Mindestens ein Kommunikationspartner, nämlich der Kommunikationspartner A, ist in Besitz eines statischen Schlüsselpaares $x_A, X_A$, mit

$$X_A = g^{\wedge}x_A,$$

wobei hier und im Folgenden mit dem Zeichen ^ gemeint ist, dass der nachfolgende Ausdruck als Exponent zum vor dem Zeichen stehenden Ausdruck, d.h. der Basis, zu verstehen ist. Die Authentizität des öffentlichen Schlüssels $X_A$ ist durch eine Zertifizierungsstelle C durch ein Zertifikat Cert($X_A$) bescheinigt.

Ist eine zweiseitige Authentisierung der Kommunikationspartner A,B gewünscht, so besitzt auch der Kommunikationspartner B ein statisches Schlüsselpaar $x_B, X_B$, mit

$$X_B = g^{\wedge}x_B.$$

Die Authentizität des öffentlichen Schlüssels $X_B$ ist ebenfalls bescheinigt, und zwar durch ein Zertifikat Cert($X_B$) einer anderen Zertifizierungsstelle C' oder der bereits oben genannten Zertifizierungsstelle C.

Das Verfahren mit einseitiger Authentisierung umfasst die folgenden Schritte:

1. Kommunikationspartner A erzeugt einen privaten ephemeralen Schlüssel $y_A$ und berechnet daraus einen öffentlichen ephemeralen Schlüssel $Y_A$ mit

$$Y_A = g^{\wedge}y_A.$$

Der Kommunikationspartner A berechnet ferner

$$e_A = H(Y_A)$$

und die elektronische Signatur

$$s_A = y_A - x_A e_A.$$

2. Kommunikationspartner B erzeugt einen privaten ephemeralen Schlüssel $y_B$ und berechnet daraus einen öffentlichen ephemeralen Schlüssel $Y_B$ mit

$$Y_B = g^{\wedge}y_B.$$

3. Die Kommunikationspartner A,B tauschen Daten aus, indem Kommunikationspartner A die Daten $X_A$, $Y_A$ und $s_A$ an Kommunikationspartner B und Kommunikationspartner B die Daten $Y_B$ an Kommunikationspartner A sendet.

4. Partei B verifiziert die erhaltene Signatur $s_A$ durch Berechnung von

$$g^{\wedge}s_A * X_A^{\wedge}H(Y_A)$$

und Vergleich des Ergebnisses mit $Y_A$. Kommunikationspartner B überprüft ferner die Authentizität von $X_A$ mit Hilfe von Cert($X_A$).

5. Die Kommunikationspartner A und B berechnen ein gemeinsames Diffie-Hellman-Geheimnis K mit

$$K = Y_B^{\wedge}y_A = Y_A^{\wedge}y_B$$

und leiten aus diesem Ergebnis einen Sitzungsschlüssel zur Absicherung der nachfolgenden Kommunikation ab.

Das Verfahren mit zweiseitiger Authentisierung weist folgende Schritte auf:

1. Kommunikationspartner A erzeugt einen privaten ephemeralen Schlüssel $y_A$ und berechnet daraus einen öffentlichen ephemeralen Schlüssel $Y_A$ mit

$$Y_A = g^{\wedge}y_A.$$

Kommunikationspartner A berechnet ferner

$$e_A = H(Y_A)$$

und die elektronische Signatur

$$s_A = y_A - x_A e_A.$$

2. Kommunikationspartner B erzeugt einen privaten ephemeralen Schlüssel $y_B$ und berechnet $Y_B$ mit

$$Y_B = g^{\wedge} y_B.$$

Kommunikationspartner B berechnet ferner

$$e_B = H(Y_B)$$

und die Signatur

$$s_B = y_B - x_B e_B.$$

3. Die Kommunikationspartner A,B tauschen Daten aus, indem Kommunikationspartner A die Daten $X_A$, $Y_A$, $s_A$ an Kommunikationspartner B und Kommunikationspartner B die Daten $X_B$, $Y_B$, $s_B$ an Kommunikationspartner A sendet.

4. Kommunikationspartner A verifiziert die erhaltene Signatur $s_B$ durch Berechnung von

$$g^{\wedge} s_B * X_B^{\wedge} H(Y_B)$$

und vergleicht das Ergebnis mit $Y_B$. Kommunikationspartner A überprüft ferner die Authentizität von $X_B$ mit Hilfe von Cert($X_B$).

5. Kommunikationspartner B verifiziert die erhaltene Signatur $s_A$ durch Berechnung von

$$g^{\wedge} s_A * X_A^{\wedge} H(Y_A)$$

und vergleicht das Ergebnis mit $Y_A$. Kommunikationspartner B überprüft ferner die Authentizität von $X_A$ mit Hilfe von Cert($X_A$).

6. Die Kommunikationspartner A,B berechnen ein gemeinsames Diffie-Hellman-Geheimnis K mit

$$K = Y_B^{\wedge} y_A = Y_A^{\wedge} y_B$$

und leiten aus diesem Geheimnis einen Sitzungsschlüssel zur Absicherung der nachfolgenden Kommunikation ab.

Mögliche Anwendungen für das erfindungsgemäße Verfahren und die beiden zuvor genannten Beispiele umfassen den Aufbau eines gegenseitig authentisierten gesicherten Kommunikationskanals zwischen zwei Chipkarten, zwischen einer Chipkarte und einem Server oder zwischen zwei Rechnern im Internet.

Die beiden zuvor genannten Ausführungsbeispiele können wie folgt erweitert bzw. abgeändert werden:

1. Die Signaturen $s_A$,$s_B$ können zusätzliche authentisierte Daten M enthalten, indem $e_A$ als

$$e_A = H(Y_A||M) \text{ statt } e_A = H(Y_A)$$

berechnet wird und bei der Verifikation ebenfalls

$$H(Y_A||M) \text{ statt } H(Y_A)$$

verwendet wird. Dies gilt ebenso für den Kommunikationspartner B im zweiseitigen Fall.

2. Es kann eine elektronische Signatur auf Basis von ECDSA anstelle des oben beschriebenen Verfahrens der Erstellung der elektronischen Signatur auf Basis einer Schnorr-Signatur verwendet werden.

3. Es können auch andere Signaturverfahren verwendet werden.

4. Das erfindungsgemäße Verfahren und die beiden oben beschriebenen Ausführungsbeispiele können analog zu DE-B-10 2011 013 562 mit PACE kombiniert werden.

**Patentansprüche**

1. Verfahren zur zumindest einseitig authentisierten, sicheren Kommunikation zwischen einem ersten Kommunikationspartner (A) und einem zweiten Kommunikationspartner (B) mittels kryptographischer Operationen in einer kryptographischen Gruppe (G) mit einem kryptographischen Generator (g) und mittels einer Hash-Funktion (H), wobei der erste Kommunikationspartner (A) über ein statisches Schlüsselpaar aus einem privaten statischen Schlüssel ($x_A$) und einem öffentlichen statischen Schlüssel ($X_A$) verfügt, der sich anhand einer Funktion des kryptographischen Generators (g) mit dem privaten statischen Schlüssel ($x_A$) als Argument ergibt und der durch eine Zertifizierungsstelle (C) mittels eines Zertifikats (Cert ($X_A$)) bescheinigt ist, mit den folgenden Schritten:

   - Bereitstellen eines ephemeralen Schlüsselpaares für den ersten Kommunikationspartner (A) umfassend einen privaten ephemeralen Schlüssel ($y_A$) und einen öffentlichen ephemeralen Schlüssel ($Y_A$), der sich anhand einer Funktion des kryptographischen Generators (g) mit dem privaten ephemeralen Schlüssel ($y_A$) als Argument ergibt,
   - Bereitstellen einer elektronischen Signatur ($s_A$) für den ersten Kommunikationspartner (A),
   - Bereitstellen eines ephemeralen Schlüsselpaares für den zweiten Kommunikationspartner (B) umfassend einen privaten ephemeralen Schlüssel ($y_B$) und einem öffentlichen ephemeralen Schlüssel ($Y_B$), der sich anhand einer Funktion des kryptographischen Generators (g) mit dem privaten ephemeralen Schlüssel ($y_B$) als Argument ergibt,
   - Zurverfügungstellung der öffentlichen statischen und ephemeralen Schlüssel ($X_A$, $Y_A$) des ersten Kommunikationspartners (A) sowie dessen elektronischer Signatur ($s_A$) für den zweiten Kommunikationspartner (B),
   - zur Verfügungsstellen des öffentlichen ephemeralen Schlüssels ($Y_B$) des zweiten Kommunikationspartners (B) für den ersten Kommunikationspartner (A),
   - auf Seiten des zweiten Kommunikationspartners (B) erfolgendes Verifizieren der elektronischen Signatur ($s_A$) des ersten Kommunikationspartners (A) durch Berechnung eines ersten Schlüssels anhand einer Funktion aus dem kryptographischen Generator (g), der elektronischen Signatur ($s_A$) sowie dem öffentlichen statischen Schlüssel ($X_A$) des ersten Kommunikationspartners (A) und der Hash-Funktion (H) sowie des öffentlichen ephemeralen Schlüssels ($Y_A$) des ersten Kommunikationspartners (A) und Vergleichen des berechneten ersten Schlüssels mit dem öffentlichen ephemeralen Schlüssel ($Y_A$) des ersten Kommunikationspartners,
   - auf Seiten des zweiten Kommunikationspartners (B) erfolgendes Überprüfen der Authentizität des öffentlichen statischen Schlüssels ($X_A$) des ersten Kommunikationspartners (A) mit Hilfe des Zertifikats (Cert ($X_A$)) und,
   - durch beide Kommunikationspartner (A,B) erfolgendes Berechnen eines gemeinsamen Diffie-Hellman-Geheimnisses (K) aus den privaten ephemeralen Schlüsseln ($y_A$,$y_B$) und den öffentlichen ephemeralen Schlüsseln ($Y_A$,$Y_B$) beider Kommunikationspartner (A,B) und Ableiten eines Sitzungsschlüssels aus diesem Geheimnis (K) zur Absicherung der nachfolgenden Kommunikation,
   - wobei die Kommunikation authentisiert ist, wenn sowohl der berechnete erste Schlüssel mit dem öffentlichen ephemeralen Schlüssel ($Y_A$) des ersten Kommunikationspartners (A) übereinstimmt, als auch die Authentizität des öffentlichen statischen Schlüssels ($X_A$) des ersten Kommunikationspartners (A) gegeben ist.

2. Verfahren nach Anspruch 1, **dadurch gekennzeichnet, dass** zur zweiseitig authentisierten, sicheren Kommunikation zwischen den beiden Kommunikationspartnern (A,B) auch der zweite Kommunikationspartner (B) über ein statisches Schlüsselpaar aus einem privaten statischen Schlüssel ($x_B$) und einem öffentlichen statischen Schlüssel ($X_B$) verfügt, der sich anhand einer Funktion des kryptographischen Generators (g) mit dem privaten statischen Schlüssel ($x_B$) als Argument ergibt und der durch eine Zertifizierungsstelle (C) mittels eines Zertifikats (Cert ($X_B$)) bescheinigt ist, und folgende zusätzliche Schritte durchgeführt werden:

   - Bereitstellen einer elektronischen Signatur ($s_B$) für den zweiten Kommunikationspartner (B),
   - Zurverfügungstellung des öffentlichen statischen Schlüssels ($X_B$) des zweiten Kommunikationspartners (B) sowie dessen elektronischer Signatur ($s_B$) für den ersten Kommunikationspartner (A),
   - auf Seiten des ersten Kommunikationspartners (A) erfolgendes Verifizieren der elektronischen Signatur ($s_B$) des zweiten Kommunikationspartners (B) durch Berechnung eines zweiten Schlüssels anhand einer Funktion aus dem kryptographischen Generator (g), der elektronischen Signatur ($s_B$) sowie dem öffentlichen statischen Schlüssel ($X_B$) des zweiten Kommunikationspartners (B) und der Hash-Funktion (H) sowie des öffentlichen ephemeralen Schlüssels ($Y_B$) des zweiten Kommunikationspartners (B) und Vergleichen des berechneten zweiten Schlüssels mit dem öffentlichen ephemeralen Schlüssel $(Y_B)$ des zweiten Kommunikationspartners (B) und

- auf Seiten des ersten Kommunikationspartners (A) erfolgendes Überprüfen der Authentizität des öffentlichen statischen Schlüssels $(X_B)$ des zweiten Kommunikationspartners (B) mit Hilfe des Zertifikats (Cert $(X_B)$),
- wobei die Kommunikation authentisiert ist, wenn zusätzlich zu den Bedingungen nach Anspruch 1 sowohl der berechnete zweite Schlüssel mit dem öffentlichen ephemeralen Schlüssel $(Y_B)$ des zweiten Kommunikationspartners (B) übereinstimmt, als auch die Authentizität des öffentlichen statischen Schlüssels $(X_B)$ des zweiten Kommunikationspartners (B) gegeben ist.

3. Verfahren nach Anspruch 1 oder 2, **dadurch gekennzeichnet, dass** die kryptographische Gruppe (G) eine multiplikativ geschriebene kryptographische Gruppe (G) ist und dass der öffentliche statische Schlüssel $(X_A, X_B)$ jeweils durch Bildung der Potenz mit dem Kryptographie-Generator (g) als Basis und dem jeweiligen privaten statischen Schlüssel $(x_A, x_B)$ als Exponent berechnet wird.

4. Verfahren nach einem der Ansprüche 1 bis 3, **dadurch gekennzeichnet, dass** der öffentliche ephemerale Schlüssel $(Y_A, Y_B)$ jeweils durch Bildung der Potenz mit dem kryptographischen Generator (g) als Basis und dem jeweiligen privaten ephemeralen Schlüssel $(y_A, y_B)$ als Exponent berechnet wird.

5. Verfahren nach einem der Ansprüche 1 bis 4, **dadurch gekennzeichnet, dass** sich der oder jeder im Zusammenhang mit der Verifizierung einer elektronischen Signatur $(s_A, s_B)$ berechnete Schlüssel als Produkt aus einem ersten Faktor und einem zweiten Faktor ergibt, wobei der erste Faktor gleich der Potenzbildung mit dem kryptographischen Generator (g) als Basis und der elektronischen Signatur $(s_A, s_B)$ des jeweiligen Kommunikationspartners (A,B) als Exponent und der zweite Faktor gleich der Potenzbildung mit dem öffentlichen statischen Schlüssel $(X_A, X_B)$ des jeweiligen Kommunikationspartners (A,B) als Basis und dem Wert der Hash-Funktion (H) für den öffentlichen ephemeralen Schlüssel $(Y_A, Y_B)$ des jeweiligen Kommunikationspartners (A,B) ist.

6. Verfahren nach einem der Ansprüche 1 bis 4, **dadurch gekennzeichnet, dass** die elektronische Signatur $(s_A, s_B)$ eine Signatur gemäß dem ECDSA-Standard ist.

7. Verfahren nach einem der Ansprüche 1 bis 6, **dadurch gekennzeichnet, dass** bei der elektronischen Signatur $(s_A, s_B)$ für einen oder jeden der Kommunikationspartner (A,B) zusätzliche zu authentisierende Daten (M) verwendet werden und dass die Verifikationen der elektronischen Signaturen $(s_A, s_B)$ unter Verwendung dieser zusätzlichen zu authentisierenden Daten (M) erfolgen.

8. Verfahren nach Anspruch 7, **dadurch gekennzeichnet, dass** die zusätzlichen zu authentisierenden Daten (M) für die Kommunikationspartner (A,B) gleich oder unterschiedlich sind.

9. Verfahren nach einem der Ansprüche 1 bis 8, **dadurch gekennzeichnet, dass** die Bereitstellung und/oder Zurverfügungstellung der einzelnen ephemeralen Schlüsselpaare $(y_A, y_B, Y_A, Y_B)$ oder der einzelnen ephemeralen Schlüssel $(y_A, y_B, Y_A, Y_B)$ oder der elektronischen Signaturen $(s_A, s_B)$ die Erzeugung und/oder Berechnung durch den jeweiligen Kommunikationspartner (A,B) umfasst.

10. Verfahren nach einem der Ansprüche 1 bis 9, **dadurch gekennzeichnet, dass** für die kryptographische Gruppe (G) gilt, dass die Berechnung des Logarithmus schwierig ist.

11. Verfahren nach einem der Ansprüche 1 bis 10, **dadurch gekennzeichnet, dass** die kryptographische Gruppe (G) eine kryptographisch sichere Gruppe (G) ist.

Europäisches
Patentamt

European
Patent Office

Office européen
des brevets

**EUROPÄISCHER RECHERCHENBERICHT**

Nummer der Anmeldung

EP 12 17 2581

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 10 2011 013562 B3 (BUNDESREP DEUTSCHLAND [DE]) 26. April 2012 (2012-04-26) * Absätze [0032], [0033], [0037], [0038] * ----- | 1-11 | INV. H04L9/08 |
| X | EP 1 768 300 A1 (CERTICORN CORP [CA] CERTICOM CORP [CA]) 28. März 2007 (2007-03-28) * Absätze [0023], [0027] - [0029] * * Absätze [0052], [0053] * ----- | 1-11 | |
| A | US 2006/093138 A1 (DURAND ALAIN [FR] ET AL) 4. Mai 2006 (2006-05-04) * Abbildung 5 * ----- | 1-11 | |
| A | US 2006/179319 A1 (KRAWCZYK HUGO M [US]) 10. August 2006 (2006-08-10) * Abbildungen 5,6 * ----- | 1-11 | |

RECHERCHIERTE SACHGEBIETE (IPC)

H04L

Der vorliegende Recherchenbericht wurde für alle Patentansprüche erstellt

| Recherchenort | Abschlußdatum der Recherche | Prüfer |
|---|---|---|
| München | 28. November 2012 | Horbach, Christian |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

...........................................................................................
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 12 17 2581

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-11-2012

| Im Recherchenbericht angeführtes Patentdokument | Datum der Veröffentlichung | Mitglied(er) der Patentfamilie | Datum der Veröffentlichung |
|---|---|---|---|
| DE 102011013562 B3 | 26-04-2012 | DE 102011013562 B3<br>WO 2012119790 A1 | 26-04-2012<br>13-09-2012 |
| EP 1768300 A1 | 28-03-2007 | EP 1768300 A1<br>EP 2104268 A2<br>EP 2315389 A2<br>EP 2315390 A2<br>EP 2315391 A2<br>HK 1101628 A1 | 28-03-2007<br>23-09-2009<br>27-04-2011<br>27-04-2011<br>27-04-2011<br>19-02-2010 |
| US 2006093138 A1 | 04-05-2006 | US 2006093138 A1<br>US 2009063863 A1 | 04-05-2006<br>05-03-2009 |
| US 2006179319 A1 | 10-08-2006 | AT 403297 T<br>CA 2596500 A1<br>EP 1847062 A1<br>ES 2308725 T3<br>JP 2009526411 A<br>US 2006179319 A1<br>WO 2006084896 A1 | 15-08-2008<br>17-08-2006<br>24-10-2007<br>01-12-2008<br>16-07-2009<br>10-08-2006<br>17-08-2006 |

EPO FORM P0461

Für nähere Einzelheiten zu diesem Anhang : siehe Amtsblatt des Europäischen Patentamts, Nr.12/82

EP 2 677 681 A1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011013562 B